# EUROPEAN PATENT APPLICATION

(11) **EP 1 829 448 A2**
(43) Date of publication of application: **05.09.2007**
(21) Application number: 07004264.3
(22) Date of filing: 01.03.2007
(51) Int. Cl.: A01N 25/30, A01N 57/20, A01P 13/00

(54) **Agricultrural chemical composition with excellent effect**

(30) Priority: 01.03.2006 JP 2006054673; 14.12.2006 JP 2006337161
(71) Applicant: NISSAN CHEMICAL INDUSTRIES LTD., Tokyo (JP)
(72) Inventor: Kamatani, Hirokazu,c/o Nissan Chemical Ind. Ltd., Funabashi-shi Chiba (JP); Yano, Tetsuhiko,c/o Nissan Chemical Ind. Ltd., Shiraoka-machi Minamisaitama-gun Saitama (JP)
(74) Representative: Hartz, Nikolai

(57) **Abstract**

The invention provides an agricultural chemical composition excellent in promoting a pest-controlling effect and a final controlling effect. The agricultural chemical composition contains an agricultural chemical active ingredient, a cationic surfactant, a nonionic surfactant and an acetylene-based surfactant having an HLB value of 12 or less. Preferably, the cationic surfactant is a quaternary alkyl ammonium salt and the nonionic surfactant is an alkyl glycoside, an alkyl polyglycoside or a polyoxyalkylene alkyl ether. As for the agricultural chemical active ingredient, a herbicide, particularly, an amino acid-based herbicide is appropriate.

## Description

### Technical Field

The present invention relates to an agricultural chemical composition capable of being easily sprayed and excellent in a pest-controlling effect.

### Background Art

Ordinarily, in order to obtain a high agricultural chemical activity, an agricultural chemical active ingredient, particularly, a herbicide necessitates existence of an appropriate surfactant. The surfactant can be provided in a highly concentrated compound or can be added to a diluted sprayable solution by an end user. For example, as described in a wide-range of studies reported in a non-patent document 1 to be described below, Wyrill and Burnside have found that capability of enhancing a herbicidal activity of an amino acid-based herbicide broadly varies depending on surfactants.

Further, in patent document 1, a method for enhancing rain fastness of the amino acid-based herbicide by using an acetylene-based diol is disclosed.

However, an effective surfactant against species of weeds which are hard to be controlled (such as field horsetail, white clover, common dayflower and tall goldenrod) has not yet been found. For this account, in order to control these species of weeds, a dosage of the amino acid-based herbicide which is several times as much as an ordinary dosage is practically used. Particularly, since the field horsetail has fast growing rhizomes, a controlling effect to be exerted as quickly as possible is required. However, even after a terrestrial part of the field horsetail is withered, since roots thereof are distributed extremely deeply and in a wide area, the terrestrial parts thereof can newly be reproduced from nodes of the roots and, then, the field horsetail can continue vegetative propagation. A multiple of tubers are developed from the roots and, from these tubers, a multiple of vegetative stems are also generated. Based on these facts, it is required that transfer of the amino acid-based herbicide absorbed from the terrestrial part of the field horsetail to a root part thereof is extremely excellent. Further, it is considered that an amount of a chemical to be attached to the field horsetail is small compared with other species of weeds from the standpoint of a shape of the terrestrial part of the field horsetail; therefore, a formulation which is also excellent in regard to the amount to be attached to the field horsetail is required.

Non-patent document 1: Weed science, Vol. 25, pp. 275 to 287 (1977); and

Patent document 1: JP-A No. 6-24918.

### Disclosure of the Invention

A problem of the present invention is to provide an agricultural chemical composition excellent in promoting a pest-controlling effect and a final controlling effect.

The present inventors have exerted intensive studies and, as a result, have fount that, in an agricultural chemical composition containing an agricultural chemical active ingredient, a cationic surfactant, a nonionic surfactant, and an acetylene-based surfactant having an HLB value of 12 or less, a pest-controlling effect of the agricultural chemical active ingredient has remarkably been enhanced and achieved the present invention.

Namely, the present invention relates to the following aspects:
[1] an agricultural chemical composition, containing an agricultural chemical active ingredient, a cationic surfactant, a nonionic surfactant and an acetylene-based surfactant having an HLB value of 12 or less;
[2] the composition according to the above-described [1], in which the cationic surfactant is a quaternary alkyl ammonium salt;
[3] the composition according to the above-described [1] or [2], in which the nonionic surfactant is an alkyl glycoside, an alkyl polyglycoside or a polyoxyalkylene alkyl ether;
[4] the composition according to any one of the above-described [1] to [3], in which the agricultural chemical active ingredient is a herbicide;
[5] the composition according to the above-described [4], in which the herbicide is an amino acid-based herbicide;
[6] the composition according to the above-described [5], in which the amino acid-based herbicide is at least one type selected from among glyphosate, bialaphos, glufosinate and salts thereof;
[7] the composition according to the above-described [5], in which the amino acid-based herbicide is at least one type selected from among glyphosate and salts thereof;
[8] the composition according to any one of the above-described [4] to [7], being for controlling a weed which is hard to be controlled;
[9] a controlling method against a weed which is hard to be controlled, being characterized by applying the composition according to any one of the above-described [4] to [7] to a weed which is hard to be controlled;
[10] the composition according to the above-described [8], in which the weed which is hard to be controlled is field horsetail or common dayflower; and
[11] the controlling method according to the above-described [9], in which the weed which is hard to be controlled is field horsetail or common dayflower.

The agricultural chemical composition according to the invention is quicker in promoting a pest-controlling effect than the agricultural chemical composition of related art and excellent in a final controlling effect.

### Best Mode for Carrying Out the Invention

The agricultural chemical active ingredient according to the invention may be any one so long as it has a pest-controlling effect and, for example, a herbicide, an insecticide, an acaricide, a nematocide, a germicide and bactericide are mentioned.

Such agricultural chemical active ingredients are specifically illustrated below. The agricultural chemical composition according to the invention may contain one or more types thereof.

Herbicides: pyrazosulfuron ethyl/generic name, halosulfuron methyl/generic name, bensulfuron methyl/generic name, imazosulfuron/generic name, azimsulfuron/generic name, cinosulfuron/generic name, cyclosulfamuron/generic name, ethoxysulfuron/generic name, esprocarb/generic name, benthiocarb/generic name, molinate/generic name, dimepiperate/generic name, pyributicarb/generic name, mefenacet/generic name, butachlor/generic name, pretilachlor/generic name, thenylchlor/generic name, bromobutide/generic name, etobenzanid/generic name, dymron/generic name, cumyluron/generic name, bentazone/generic name, a salt of bentazone, 2,4-D/generic name, a salt of 2,4-D, an ester of 2,4-D, MCP/generic name, a salt of MCP, an ester of MCP, MCPB/generic name, a salt of MCPB, an ester of MCPB, phenothiol (MCPA-thioethyl/generic name), clomeprop/generic name, naproanilide/generic name, oxadiazon/generic name, pyrazolate/generic name, pyrazoxyfen/generic name, benzofenap/generic name, oxadiargyl/generic name, dimethametryn/generic name, simetryn/generic name, piperophos/generic name, anilofos/generic name, butamifos/generic name, bensulide/generic name, dithiopyr/generic name, pyriminobac methyl/generic name, CNP/generic name, chlormethoxynil/generic name, cyhalofop butyl/generic name, bifenox/generic name, cafenstrole/generic name, pentoxazone/generic name, indanofan/generic name, oxaziclomefone/generic name, fentrazamide/generic name, butenachlor/generic name, ACN/generic name, benzobicyclon / test name, benfuresate/generic name, cimmethylin/generic name, simazine/generic name, dichlobenil/generic name, diuron/generic name, chloro-IPC (chlorpropham/generic name), atrazine/generic name, alachlor/generic name, isouron/generic name, chlorphtalim/generic name, cyanazin/generic name, trifluralin/generic name, butamifos/generic name, propyzamide/generic name, prometryn/generic name, pendimethalin/generic name, metolachlor/generic name, metribuzin/generic name, linuron/generic name, lenacil/generic name, propanil/generic name, MCPA/generic name, ioxynil (ioxynil octanoate/generic name), asulam/generic name, quizalofop-ethyl/generic name, propaquizafop/generic name, quizalofop-tefuryl/generic name, sethoxydim/generic name, thifensulfuron-methyl/generic name, fenoxaprop-ethyl/generic name, phenmedipham/generic name, fluazifop-butyl/generic name, bentazone/generic name, SAP (bensulide/generic name), TCTP (chlorthal-dimethyl tetrachlorothiophene/generic name), amiprophosmethyl/generic name, ametryn/generic name, isoxaben/generic name, orbencarb/generic name, karbutilate/generic name, dithiopyr/generic name, siduron/generic name, thiazafluron/generic name, napropamide/generic name, prodiamine/generic name, bethrodine (benefin/generic name), methyl dymron/generic name, 2,4-PA/generic name, MCPPA/generic name, flazasulfuron/generic name, metsulfuron-methyl/generic name, imazaquin/generic name, imazapyr/generic name, tetrapion (flupropanate/generic name), tebuthiuron/generic name, bromacil/generic name, hexazinone/generic name, glyphosate/generic name, a salt of glyphosate, bialaphos/generic name, glufosinate/generic name, a salt of glufosinate, MCC/generic name and the like.

Germicides: acibenzolar/generic name, ampropyfos/generic name, anilazine/generic name, azaconazole/generic name, azoxystrobin/generic name, benalaxyl/generic name, benodanil/generic name, benomyl/generic name, benzamacril/generic name, binapacryl/generic name, biphenyl/generic name, bitertanol/generic name, bethoxazine/generic name, bordeaux mixture/generic name, blasticidin-S/generic name, bromoconazole/generic name, bupirimate/generic name, buthiobate/generic name, calcium polysulfide/generic name, captafol/generic name, captan/generic name, copper oxychloride/generic name, carpropamid/generic name, carbendazim/generic name, carboxin/generic name, chinomethionat/generic name, chlobenthiazone/generic name, chlorfenazol/generic name, chloroneb/generic name, chlorothalonil/generic name, chlozolinate/generic name, cufraneb/generic name, cymoxanil/generic name, cyproconazol/generic name, cyprodinil/generic name, cyprofuram/generic name, debacarb/generic name, dichlorophen/generic name, diclobutrazol/generic name, dichlofluanid/generic name, diclomezine/generic name, dicloran/generic name, diethofencarb/generic name, diclocymet/generic name, difenoconazole/generic name, diflumetorim/generic name, dimethirimol/generic name, dimethomorph/generic name, diniconazole/generic name, diniconazole-M/generic name, dinocap/generic name, diphenylamine/generic name, dipyrithione/generic name, ditalimfos/generic name, dithianon/generic name, dodemorph/generic name, dodine/generic name, drazoxolon/generic name, edifenphos/generic name, epoxiconazole/generic name, etaconazole/generic name, ethirimol/generic name, etridiazole/generic name, famoxadone/generic name, fenarimol/generic name, febuconazole/generic name, fenfuram/generic name, fenpiclonil/generic name, fenpropidin/generic name, fenpropimorph/generic name, fentin/generic name, ferbam/generic name, forimzone/generic name, fluazinam/generic name, fludioxonil/generic name, fluoroimide/generic name, fluquinconazole/generic name, flusilazole/generic name, flusulfamide/generic name, flutolanil/generic name, flutriafol/generic name, folpet/generic name, fosetyl-aluminium/generic name, fuberidazole/generic name, furalaxyl/generic name, fenamidone/generic name, fenhexamid/generic name, guazatine/generic name, hexachlorobenzene/generic name, hexaconazole/generic name, hymexazol/generic name, imazalil/generic name, imibenconazole/generic name, iminoctadine/generic name, ipconazole/generic name, iprobenfos/generic name, iprodione/generic name, isoprothiolane/generic name, iprovalicarb/generic name, kasugamycin/generic name, kresoxim-methyl/generic name, mancopper/generic name, mancozeb/generic name, maneb/generic name, mepanipyrim/generic name, mepronil/generic name, metalaxyl/generic nam, metconazole/generic name, metiram/generic name, metominostrobin/generic name, myclobutanil/generic name, nabam/generic name, nickel bis(dimethyl dithiocarbamate)/generic name, nitrothal-isopropyl/generic name, nuarimol/generic name, octhilinone/generic name, ofurace/generic name, oxadixyl/generic name, oxycarboxin/generic name, oxpoconazole fumarate/generic name, pefurzoate/generic name, penconazole/generic name, pencycuron/generic name, phthalide/generic name, piperalin/generic name, polyoxins/generic name, probenazole/generic name, prochloraz/generic name, procymidone/generic name, propamocarb hydrochloride/generic name, propiconazole/generic name, propineb/generic name, pyrazophos/generic name, pyrifenox/generic name, pyrimethanil/generic name, pyroquilon/generic name, quinoxyfen/generic name, quintozene/generic name, sulfur, spiroxamine/generic name, tebuconazole/generic name, tecnazene/generic name, tetraconazole/generic name, thiabendazole/generic name, thifluzamide/generic name, thiophanate-methyl/generic name, thiram/generic name, tolclofos-methyl/generic name, tolylfluanid/generic name, triadimefon/generic name, toriadimenol/generic name, triazoxide/generic name, tricyclazole/generic name, tridemorph/generic name, triflumizole/generic name, triforine/generic name, triticonazole/generic name, validamycin/generic name, vinclozolin/generic name, zineb/generic name, ziram/generic name, oxine-copper/generic name and the like.

Bactericides: streptomycin/generic name, oxytetracycline/generic name, oxolinic acid/generic name and the like.

Nematocides: aldoxycarb/generic name, fosthiazate/generic name, fosthietan/generic name, oxamyl/generic name, fenamiphos/generic name and the like.

Acaricides: amitraz/generic name, bromopropylate/generic name, chinomethionat/generic name, chlorobezilate/generic name, clofentezine/generic name, cyhexatine/generic name, dicofol/generic name, dienochlor/generic name, etoxazole/generic name, fenazaquin/generic name, fenbutatin oxide/generic name, fenpropathrin/generic name, fenproximate/generic name, halfenprox/generic name, hexythiazox/generic name, milbemectin/generic name, propargite/generic name, pyridaben/generic name, pyrimidifen/generic name, tebufenpyrad/generic name and the like.

Insecticides: abamectin/generic name, acephate/generic name, acetamipirid/generic name, azinphos-methyl/generic name, bendiocarb/generic name, benfuracarb/generic name, bensultap/generic name, bifenthrin/generic name, buprofezin/generic name, butocarboxim/generic name, carbaryl/generic name, carbofuran/generic name, carbosulfan/generic name, cartap/generic name, chlorfenapyr/generic name, chlorpyrifos/generic name, chlorfenvinphos/generic name, chlorfluazuron/generic name, clothianidin/generic name, chromafenozide/generic name, chlorpyrifos-methyl/generic name, cyfluthrin/generic name, beta-cyfluthrin/generic name, cypermethrin/generic name, cyromazine/generic name, cyhalothrin/generic name, lambda-cyhalothrin/generic name, deltamethrin/generic name, diafenthiuron/generic name, diazinon/generic name, diacloden/generic name, diflubenzuron/generic name, dimethylvinphos/generic name, diofenolan/generic name, disulfoton/generic name, dimethoate/generic name, EPN, esfenvalerate/generic name, ethiofencarb/generic name, ethiprole/generic name, etofenprox/generic name, etrimfos/generic name, fenitrothion/generic name, fenobucarb/generic name, fenoxycarb/generic name, fenpropathrin/generic name, fenvalerate/generic name, fipronil/generic name, flucythrinate/generic name, flufenoxuron/generic name, flufenprox/generic name, tau-fluvalinate/generic name, fonophos/generic name, formetanate/generic name, formothion/generic name, furathiocarb/generic name, halofenozide/generic name, hexaflumuron/generic name, hydramethylnon/generic name, imidacloprid/generic name, isofenphos/generic name, indoxacarb/generic name, isoprocarb/generic name, isoxathion/generic name, lufenuron/generic name, malathion/generic name, metaldehyde/generic name, methamidophos/generic name, methidathion/generic name, methacrifos/generic name, metalcarb/generic name, methomyl/generic name, methoprene/generic name, methoxychlor/generic name, methoxyfenozide/generic name, monocrotophos/generic name, muscalure/generic name, nitenpyram/generic name, omethoate/generic name, oxydemeton-methyl/generic name, oxamyl/generic name, parathion/generic name, parathion-methyl/generic name, permethrin/generic name, phenthoate/generic name, phoxim/generic name, phorate/generic name, phosalone/generic name, phosmet/generic name, phosphamidon/generic name, pirimicarb/generic name, pirimiphos-methyl/generic name, profenofos/generic name, pymetrozine/generic name, pyraclofos/generic name, pyriproxyfen/generic name, rotenone/generic name, sulprofos/generic name, silafluofen/generic name, spinosad/generic name, sulfotep/generic name, tebfenozide/generic name, teflubenzuron/generic name, tefluthorin/generic name, terbufos/generic name, tetrachlorvinphos/generic name, thiodicarb/generic name, thiamethoxam/generic name, thiofanox/generic name, thiometon/generic name, tolfenpyrad/generic name, tralomethrin/generic name, trichlorfon/generic name, triazuron/generic name, triflumuron/generic name, vamidothion/generic name and the like.

Among these agricultural chemical active ingredients, when the herbicide, particularly, the amino acid-based herbicide is applied, the invention exhibits a particularly remarkable pest-controlling effect. The amino acid-based herbicide according to the present invention is a non-selective herbicide and, for example, glyphosate, bialaphos, glufosinate, and salts thereof are mentioned. Thereamong, preferable amino acid-based herbicides are glyphosate and the salts thereof. Glyphosate, bialaphos and glufosinate are ordinarily used in form of respective salts thereof. The salts may be organic salts or inorganic salts and are not particularly limited so long as they can be used as agricultural chemicals. Examples of such salts include alkali metal salts such as a sodium salt, a potassium salt and a lithium salt; alkali earth metal salts such as a calcium salt; ammonium; isopropyl amine salts; and trimethyl sulfonium salts. Thereamong, preferable salts are isopropyl amine salts, ammonium salts and potassium salts.

The agricultural chemical composition according to the invention can contain both the amino acid-based herbicide and any other agricultural chemical active ingredient than the amino acid-based herbicide and, on this occasion, a further remarkable effect can be exhibited.

The term "cationic surfactant" used herein means any surfactant having a positively charged group or a group capable of obtaining a positive charge by being protonated and encompasses an amphoteric surfactant and a zwitterionic surfactant.

In types of appropriate cationic surfactants, primary, secondary and tertiary alkylamines, primary, secondary and tertiary alkyl aminium salts (however, an amine group is substantially protonated in the composition) and ominium salts such as a quaternary alkyl ammonium salt, and mixtures thereof are included. A wide range of surfactants of primary, secondary, tertiary and twitterionic alkyl amine and the quaternary alkyl ammonium salt can be utilized in embodiments of the invention. Examples of appropriate anions which are combined with the cationic surfactants according to the invention include a chloride anion, a hydroxide anion, a glyphosate anion, a sulfate anion, and a phosphate anion.

As for preferable primary, secondary and tertiary alkylamine surfactants to be used in the invention, a tertiary polyoxyalkylene alkylamine and a tertiary polyoxyalkylene alkyl ether amine are mentioned.

As for preferable zwitterionic or amphoteric alkyl ammonium surfactants to be used in the invention, amino acid derivatives such as glycine, β-alanine and aspartic acid each having an alkyl, a dialkyl or an alkyl lower alkyl group are mentioned.

A preferable alkyl ammonium salt is a quaternary alkyl ammonium salt. Examples of such quaternary alkyl ammonium salts useful in the invention include a quaternarized (for example, N-methyl) alkylamine, a quaternarized polyoxyalkylene alkylamine, quaternary salts of pyridines, quaternary salts of carboxylated imidazolines (open and closed chains), and a trialkyl betaine. A trialkyl amine oxide forms a quaternary ammonium hydroxide salt when added to water and is also a useful type of compound in an embodiment of the invention.

As for preferable quaternary alkyl ammonium salts to be used in the invention, an alkyl lower alkyl di(hydroxy lower alkyl) ammonium chloride, a dialkyl di(lower alkyl) ammonium chloride, an alkyl tri(lower alkyl) ammonium chloride, carboxymethylated imidazolines and an alkyl di(lower alkyl) betaine are mentioned. Thereamong, a dialkyl dimethyl ammonium chloride and an alkyl trimethyl ammonium chloride are particularly preferred.

Appropriate quarternary ammonium salts to be used in the invention are mentioned below; however, these salts are merely illustrative and the invention is by no means limited thereto.
1. Quaternarized long-chain amine:
   a) alkyl tri(lower alkyl) ammonium chloride
      i) trimethyl coco ammonium chloride (coco: alkyl of from C₁₂ to C₁₅)
      ii) trimethyl octadecyl ammonium chloride
   b) dialkyl di(lower alkyl) ammonium chloride
      i) dimethyl dioctadecyl ammonium chloride.
2. Quaternarized polyoxyalkylene long-chain amine:
   a) dialkyl di(hydroxyethyl) ammonium chloride
      i) methyl bis(2-hydroxyethyl) coco ammonium chloride
      ii) methyl bis(2-hydroxyethyl) lauryl ammonium chloride
      iii) methyl bis(2-hydroxyethyl) oleyl ammonium chloride
   b) alkyl di(polyoxyethylene) lower alkyl ammonium chloride
      i) methyl bis(ω-hydroxypolyoxyethylene) coco ammonium chloride (however, polyoxyethylene is derived from 3 to 20 mols of ethylene oxide)
      ii) methyl bis(ω-hydroxypolyoxyethylene) oleyl ammonium chloride (however, polyoxyethylene is derived from 3 to 20 mols of ethylene oxide)
   c) hydroxyalkyl polyoxyethylene di(lower alkyl) ammonium chloride
      i) hydroxyethyl dimethyl polyoxyethylene (2 mols) ammonium chloride
   d) alkyl tri(polyoxyethylene) ammonium phosphate
      i) lauryl tri(polyoxyethylene) ammonium phosphate.
3. Quaternarized pyridines:
   i) N-octyl pyridine chloride
   ii) N-dodecyl pyridine chloride
4. Quaternarized carboxylated imidazolines (closed and open chains):
   i) N-carboxymethyl-N-aminoethyl undecyl imidazoline
   ii) N-carboxy-N-hydroxyethyl undecyl imidazoline
   iii) N-carboxymethyl-N-aminoethyl-(N',N'-dicarboxymethyl) undecyl imidazoline
   iv) N-carboxymethyl-N-(carboxymethoxy)ethyl undecyl imidazoline
   v) N-carboxymethyl-N-hydroxyethyl heptadecyl imidazoline
   vi) N-carboxymethyl-N-hydroxyethyl undecyl imidazoline.
5. Trialkyl betaine:
   a) alkyl di(lower alkyl) betaine
      i) lauryl dimethyl betaine
      ii) stearyl dimethyl betaine
      iii) coco dimethyl betaine
      iv) decyl dimethyl betaine.
6. Amine oxide:
   a) alkyl di(lower alkyl) amine oxide
      i) lauryl dimethylamine oxide
      ii) stearyl dimethylamine oxide
   b) di(hydroxyethyl) alkylamine oxide
      i) di(hydroxyethyl) octylamine oxide
      ii) di(hydroxyethyl) dodecylamine oxide
      iii) di(hydroxyethyl) tallowamine oxide
   c) di(polyhydroxyethylene) alkylamine oxide
      i) bis(ω-hydroxypolyoxyethylene) tallowamine oxide
   d) lower alkyl polyoxyethylene alkylamine oxide
      i) methyl polyoxyethylene (2 mols) coco amine oxide.

The nonionic surfactant according to the invention is any other nonionic surfactant than the acetylene-based surfactant and such nonionic surfactants are illustrated below.

Polyethylene glycol type surfactants: a polyoxyalkylene alkyl ether, a polyoxyethylene alkyl (C_{8 to 18}) ether, an ethylene oxide-adduct of an alkyl naphthol, a polyoxyethylene (mono-or di-)alkyl(C_{8 to 12}) phenyl ether, a formalin condensate of a polyoxyethylene (mono- or di-)alkyl(C_{8 to 12}) phenyl ether, a polyoxyethylene (mono-, di- or tri-)phenyl phenyl ether, a polyoxyethylene (mono-, di- or tri-)benzyl phenyl ether, a polyoxypropylene (mono-, di- or tri-)benzyl phenyl ether, a polyoxyethylene (mono-, di- or tri-)styryl phenyl ether, a polyoxypropylene (mono-, di- or tri-)styryl phenyl ether, a polyoxyethylene (mono-, di- or tri-)styryl phenyl ether polymer, a polyoxyethylene-polyoxypropylene block polymer, an alkyl (C_{8 to 18}) polyoxyethylene-polyoxypropylene block polymer ether, an alkyl(C_{8 to 12}) phenyl polyoxyethylene-polyoxypropylene block polymer ether, a polyoxyethylene bisphenyl ether, a polyoxyethylene resin acid ester, a polyoxyethylene fatty acid(C_{8 to 18}) monoester, a polyoxyethylene fatty acid(C_{8 to 18}) diester, a polyoxyethylene sorbitan fatty acid(C_{8 to 18}) ester, a glycerol fatty acid ester ethylene oxide adduct, a castor oil ethylene oxide adduct, a hardened castor oil ethylene oxide adduct, an alkyl(C_{8 to 18}) amine ethylene oxide adduct, an fatty acid (C_{8 to 18}) amide ethylene oxide adduct and the like.

Polyhydric alcohol type surfactants: a glycerol fatty acid ester, a polyglycerin fatty acid ester, a pentaerythritol fatty acid ester, a sorbitol fatty acid(C_{8 to 18}) ester, a sorbitan fatty acid(C_{8 to 18}) ester, a sucrose fatty acid ester, a polyhydric alcohol alkyl ether, a fatty acid alkanol amide, an alkyl glycoside, an alkyl polyglycoside and the like.

Favorable nonionic surfactants are a sucrose fatty acid ester, an alkyl glycoside, an alkyl polyglycoside and a polyoxyalkylene alkyl ether. More preferable ones are an alkyl glycoside, an alkyl polyglycoside and polyoxyalkylene alkyl ether.

Such alkyl glycosides and alkyl polyglycosides to be used in the invention are represented by the following formula (I) :

R₁O(R₂O)_{b}(Z)ₐ (I)

[wherein R₁ represents a monovalent organic group having from 6 to 30 carbon atoms;
R₂ represents a divalent alkylene group having from 2 to 4 carbon atoms;
Z represents a saccharide residue having from 5 to 6 carbon atoms;
b represents a numeral of from 0 to 12; and
a represents a numeral of from 1 to 6]. Preferable alkyl polyglycoside capable of being used in the composition according to the invention has the formula (I) in which Z represents a glucose residue and b represents 0. According to the invention, it is preferable to use an alkyl glycoside derived from an aliphatic alcohol. A preferable alkyl glycoside is an alkyl glycoside containing aliphatic alcohols each having a chain length of C₈, C₁₀, C₁₂, C₁₆ or C₁₈ each individually or in mixtures thereof. A C₁₆ or C₁₈ group may sometimes contain from 1 to 3 ethylenic unsaturated double bonds.

As far as a saccharide portion of the alkyl glycoside is concerned, an alkyl glycoside having a sugar chain containing from 1 to 10 sugar residues on an average which are attached to one another by means of a glycoside bond is appropriate. Although sugar residues of different types of reducing sugars can be used, those of glucose and maltose are preferred. The number of the sugar residues indicates a statistical average number based on a distribution typical to each of these products. Particularly appropriate alkyl glycoside contains from 1.4 to 5 sugar molecules on an average per alkyl group and, more preferably, from 1.4 to 5 glucose molecules. Particularly preferably, an average polymerization degree of the glycoside residue of at least one alkyl polyglycoside is from about 1. 4 to about 1.8. Among these surfactants, the alkyl glycoside having a carbon chain with a chain length of from C₈ to C₁₄ is particularly preferred.

A total amount of the cationic and nonionic surfactants to be contained in the composition to be used in the invention is not particularly limited and is, based on one part by weight of the agricultural chemical active ingredient, ordinarily from 0.01 to 1 part by weight and, preferably, from 0.05 to 0.4 part by weight.

A ratio of the cationic surfactant to any other nonionic surfactant than the acetylene-based surfactant is from 1:0.1 to 1:10 and, preferably, from 1:0.2 to 1:5.

Examples of such acetylene-based surfactants according to the invention include an acetylene alcohol, an acetylene diol and surfactants of ethylene oxide adducts thereof.

Examples of such acetylene alcohols include a compound represented by the formula, HOCR¹R²-C≡CH [wherein R¹ and R² each represent an alkyl group having from 1 to 8 carbon atoms]. Preferably, R¹ represents a methyl group and R² represents an isobutyl group, R¹ and R² each represent a methyl group, or R¹ represents a methyl group and R² represents an ethyl group.

Examples of such acetylene diols include a compound represented by the formula, HOCR¹R²-C≡C-CR¹R²OH [wherein R¹ and R² may be same with or different from each other and each represent an alkyl group having from 1 to 8 carbon atoms]. Preferably, R¹ represents a methyl group and R² represents an ethyl group, R¹ represents a methyl group and R² represents an isobutyl group, R¹ and R² each represent a methyl group, or R¹ represents a methyl group and R² represents an isopentyl group.

Further, examples of surfactants in which ethylene oxide is added to these alcohols include compounds in which ethylene oxide and/or propylene oxide is added to, for example, the acetylene alcohols and the acetylene diols.

An upper limit of the HLB value of the acetylene-based surfactant is preferably 12 or less, more preferably 10 or less and still more preferably 8 or less. A lower limit of the HLB value of the acetylene-based surfactant is not particularly restricted and is preferably 2 or more and, more preferably, 4 or more.

The acetylene-based surfactant according to the present invention can be added in such a range as enhances a controlling effect of the agricultural chemical active ingredient and an amount thereof to be added is, based on 500 parts by weight of the agricultural chemical active ingredient, ordinarily 0.001 part by weight or more, preferably from 0.01 to 100 parts by weight and, more preferably, from 0.05 to 50 parts by weight.

The composition according to the invention can optionally contain one or more of other compatible surfactants.

For example, anionic surfactants or other surfactants to be illustrated below can be mentioned.

As for the anionic surfactants, following surfactants are illustrated:
Carboxylic acid type surfactants: carboxylic acids such as a copolymer of polyacrylic acid, polymethacrylic acid, polymaleic acid, polymaleic acid anhydride, maleic acid or maleic acid anhydride and an olefin (such as isobutylene or diisobutylene), a copolymer of acrylic acid and itaconic acid, a copolymer of methacrylic acid and itaconic acid, a copolymer of maleic acid or maleic acid anhydride and styrene, a copolymer of acrylic acid and methacrylic acid, a copolymer of acrylic acid and methyl acrylate, a copolymer of acrylic acid and vinyl acetate, a copolymer of acrylic acid and maleic acid or maleic acid anhydride, an N-methyl-fatty acid(C_{12 to 18}) sarcosinate, a resin acid and a fatty acid(C_{12 to 18}), and salts thereof.

Sulfuric acid ester type surfactants: sulfuric acid esters such as an alkyl(C_{12 to 18}) sulfuric acid ester, a polyoxyethylene alkyl(C_{12 to 18}) ether sulfuric acid ester, a polyoxyethylene (mono- or di-)alkyl(C_{8 to 12}) phenyl ether sulfuric acid ester, a sulfuric acid ester of a polyoxyethylene (mono- or di-)alkyl(C_{8 to 12}) phenyl ether polymer, a polyoxyethylene (mono-, di- or tri-)phenyl phenyl ether sulfuric acid ester, a polyoxyethylene (mono-, di- or tri-)benzyl phenyl ether sulfuric acid ester, a polyoxyethylene (mono-, di- or tri-)styryl phenyl ether sulfuric acid ester, a sulfuric acid ester of a polyoxyethylene (mono-, di- or tri-)styryl phenyl ether polymer, a sulfuric acid ester of a polyoxyethylene-polyoxypropylene block polymer, a sulfated oil, a sulfated fatty acid ester, a sulfated fatty acid and a sulfated olefin, and salts thereof.

Sulfonic acid type surfactants: sulfonic acids such as a paraffin(C_{12 to 22}) sulfonic acid, an alkyl(C_{8 to 12}) benzene sulfonic acid, a formalin condensate of an alkyl(C_{8 to 12}) benzene sulfonic acid, a formalin condensate of cresol sulfonic acid, an α-olefin(C_{14 to 16}) sulfonic acid, a dialkyl(C_{8 to 12}) sulfosuccinic acid, lignin sulfonic acid, a polyoxyethylene (mono- or di-) alkyl(C_{8 to 12}) phenyl ether sulfonic acid, a polyoxyethylene alkyl(C_{12 to 18}) ether sulfosuccinic acid half ester, a naphthalene sulfonic acid, a (mono- or di-)alkyl(C₁ to ₆) naphthalene sulfonic acid, a formalin condensate of naphthalene sulfonic acid, a formalin condensate of (mono- or di-)alkyl(C_{1 to 6}) naphthalene sulfonic acid, a formalin condensate of creosote oil sulfonic acid, an alkyl(C_{8 to 12}) diphenyl ether disulfonic acid, Igepon T (trade name), polystyrene sulfonic acid and a copolymer of polystyrene sulfonic acid, styrene sulfonic acid and methacrylic acid, and salts thereof.

Phosphpric acid ester type surfactants: phosphoric acid esters such as an alkyl(C₈ to ₁₂) phosphoric acid ester, a polyoxyethylene alkyl(C_{12 to 18}) ether phosphoric acid ester, a polyoxyethylene (mono- or di-)alkyl(C_{8 to 12}) phenyl ether phosphoric acid ester, a phosphoric acid ester of a polyoxyethylene (mono-, di- or tri-)alkyl(C_{8 to 12}) phenyl ether polymer, a polyoxyethylene (mono-, di- or tri-)phenyl phenyl ether phosphoric acid ester, a polyoxyethylene (mono-, di- or tri-)benzyl phenyl ether phosphoric acid ester, a polyoxyethylene (mono-, di- or tri-)styryl phenyl ether phosphoric acid ester, a phosphoric acid ester of a polyoxyethylene (mono-, di- or tri-)styryl phenyl ether polymer, a phosphoric acid ester of a polyoxyethylene-polyoxypropylene block polymer, a phosphatidyl choline, phosphatidyl ethanolimine and a condensed phosphoric acid (such as tripolyphosphoric acid), and salts thereof.

As for salts of the above-described anionic surfactants, alkali metals (such as lithium, sodium and potassium), alkali earth metals (such as calcium and magnesium), ammonium and various types of amines (such as an alkylamine, a cycloalkylamine and an alkanolamine) are mentioned.

As for other surfactants, for example, an acetylene-based surfactant having an HLB value of more than 12, a silicone-based surfactant and a fluorine-based surfactant are mentioned.

The agricultural chemical composition according to the invention can be used for controlling various types of plants. Therefore, the agricultural chemical composition according to the invention can be applied to a plant in a herbicidally effective amount, and can effectively control one or more plant species of one or more of the following genera without restriction:

Abutilon, Amaranthus, Artemisia, Asclepias, Avena, Axonopus, Borreria, Brachiaria, Brassica, Bromus, Chenopodium, Cirsium, Commelina, Convolvulus, Cynodon, Cyperus, Digitaria, Echinochloa, Eleusine, Elymus, Equisetum, Erodium, Helianthus, Imperata, Ipomoea, Kochia, Lolium, Malva, Oryza, Ottochloa, Panicum, Paspalum, Phalaris, Phragmites, Polygonum, Portulaca, Pteridium, Pueraria, Rubus, Salsola, Setaria, Sida, Sinapis, Sorghum, Triticum, Typha, Ulex, Xanthium and Zea.

Particularly important annual broadleaf species for which the agricultural chemical composition according to the invention is used are exemplified without limitation by the following:
velvetleaf (Abutilon theophrasti), pigweed (Amaranthus spp.), buttonweed (Borreria spp.), oilseed rape, etc. (Brassica spp.), filaree (Erodium spp.), sunflower (Helianthus spp.), morningglory (Ipomoea spp.), kochia (Kochia scoparia), mallow (Malva spp.), wild buckwheat, etc. (Polygonum spp.), purslane (Portulaca spp.), russian thistle (Salsola spp.), sida (Sida spp.), wild mustard (Sinapis spp.), cocklebur (Xanthium spp.), beggar ticks (Bidens spp.) and common lambsquarters (Chenopodium spp.).

Particularly important annual narrowleaf species for which the agricultural chemical composition according to the invention is used are exemplified without limitation by the following: wild oat (Avena fatua), carpetgrass (Axonopus spp.), downy brome (Bromus tectorum), crabgrass (Digitaria spp.), Japanese millet (Echinochloa crus-galli), goosegrass (Eleusine indica), annual ryegrass (Lolium multiflorum), rice (Oryza sativa), ottochloa (Ottochloa nodosa), bahiagrass (Paspalum notatum), foxtail (Setaria spp.), brachiaria (Brachiaria spp.), annual bluegrass (Poa spp.), commelina (Commelina spp.), wheat (Triticum aestivum) and corn (Zea mays).

Particularly important perennial broadleaf species for which the agricultural chemical composition according to the invention is used are exemplified without limitation by the following:
mugwort (Artemisia spp.), milkweed (Asclepias spp.), canada thistle (Cirsium arvense), field bindweed (Convolvulus arvensis) and kudzu (Pueraria spp.), tall goldenrod (Solidago spp.), white clover (Tirfolium spp.) and pokeweed (Phytolacca spp.).

Particularly important perennial narrowleaf species for which the agricultural chemical composition according to the invention is used are exemplified without limitation by the following:
bermudagrass (Cynodon dactylon), yellow nutsedge (Cyperus esculentus), purple nutsedge (C. rotundus), quackgrass (Elymus repens), lalang (Imperata cylindrica), perennial ryegrass (Lolium perenne), guineagrass (Panicum maximum), dallisgrass (Paspalum dilatatum), reed (Phragmites spp.), johnsongrass (Sorghum halepense), canarygrass (Phalaris spp.) and cattail (Typha spp.).

Other particularly important perennial species for which the agricultural chemical composition according to the invention is used are exemplified without limitation by the following:
field horsetail (Equisetum spp.), bracken (Pteridium aquilinum), blackberry (Rubus spp.) and gorse (Ulex europaeus).

The agricultural chemical composition according to the invention exhibits an excellent effect in controlling weeds by glyphosate which are hard to be controlled such as field horsetail, common dayflower, white clover and tall goldengrass.

The agricultural chemical composition according to the invention is mixed with an appropriate liquid or solid carrier and may, further, be optionally added with at least one of a penetrating agent, a spreading agent, a thickener, an anti-freezing agent, a binder, an anti-caking agent, a disintegrator, a defoaming agent, anti-septics, a coloring agent, a chelating agent, a stabilizer, a decomposition inhibitor and the like, to thereby prepare a formulation of an emulsifiable concentrate, a soluble concentrate, wettable powder, water dispersible granules, an aqueous suspension concentrate, a suspoemulsion, dustable powder, granules, a gelling agent or the like. Further, from a viewpoint of laborsaving and the improvement in safety, a product in which the above-mentioned formulation is contained in a water-soluble packaging material such as a water-soluble capsule and a water soluble film is included in the composition to be used in the invention.

Examples of such solid carriers capable of being used in the invention include natural minerals such as quartz, kaolinite, pyrophyllite, celisite, talc, bentonite, acid clay, attapulgite, zeolite, and diatomaceous earth; inorganic salts such as calcium carbonate, ammonium sulfate, sodium sulfate, and potassium chloride; synthetic silica; and synthetic silicate.

Examples of such liquid carriers capable of being used in the invention include alcohols such as ethylene glycol, propylene glycol, and isopropanol; aromatic hydrocarbons such as xylene, an alkylbenzene, and an alkyl naphthalene; ethers such as butyl cellosolve; ketones such as cyclohexanone; esters such as γ-butyrolactone; acid amides such as N-methyl pyrrolidone, and N-octyl pyrrolidone; vegetable oils such as a soybean oil, a rapeseed oil, a cotton seed oil, and a castor oil; and water. Preferably, water, polar solvents such as alcohols such as ethylene glycol, diethylene glycol, propylene glycol, dipropylene glycol and isopropanol; ethers such as butyl cellosolve; ketones such as cyclohexanone; esters such as γ-butyrolactone; acid amides such as N-methyl pyrrolidone and N-octyl pyrrolidone, or mixtures thereof are mentioned. More preferably, water, propylene glycol, dipropylene glycol or the like can be mentioned.

These solid and liquid carriers may be used each independently or in mixtures of two or more types.

The thickener capable of being used in the invention is not particularly limited and may be an organic or inorganic natural product, a synthetic product or a semi-synthetic product. Examples of such thickeners include hetero polysaccharides such as xanthane gum, Welan gum and Rhamsan gum; synthetic water-soluble polymer compounds such as polyvinyl alcohol, polyvinylpyrrolidone, polyacrylic acid, sodium polyacrylate and polyacrylamide; cellulose derivatives such as methyl cellulose, carboxymethyl cellulose, carboxyethyl cellulose, hydroxyethyl cellulose and hydroxypropyl cellulose; smectite type clay minerals such as montmorillonite, saponite, hectorite, bentonite, beidellite, nontronite, sauconite, stevensite, Laponite, and synthetic smectite. These thickeners may be used alone or in combinations of two or more types. When the thickeners are mixed together, a mixing ratio thereof can freely be selected. These thickeners may each be added directly or in form of an aqueous dispersion which has previously been prepared. An amount of any thickener to be added to the composition according to the invention can also be freely selected.

As for the defoaming agent, a silicone-based emulsion type defoaming agent can be mentioned.

Chelating agents capable of being used in the invention are not particularly limited, so long as they each have a chelating effect. Examples of the chelating agents include EDTA, NTA, HEDTA, DTPA, TTHA, PDTA, DPTA-OH, HIDA, DHEG, GEDTA, HEDP, NTMP, PBTC, oxalic acid, succinic acid, glycine, malic acid, citric acid, glycolic acid, gluconic acid, heptonic acid, tartaric acid, and salts thereof (such as sodium salts, and potassium salts thereof).

A total amount of the chelating agents capable of being contained in the composition according to the invention is not particularly limited and is, based on one part by weight of the amino acid-based herbicide, ordinarily from 0.005 to 0.5 part by weight and, preferably, from 0.05 to 0.2 part by weight.

As for the stabilizer capable of being used in the invention, an anti-oxidant is favorable. Examples of such anti-oxidants include calcium disodium ethylenediamine tetraacetate, disodium ethylenediamine tetraacetate, erythorbic acid, sodium erythorbate, isopropyl citrate, dibutylhydroxytoluene, butylhydroxyanisole, propyl gallate, ascorbic acid, an ascorbic acid-stearic acid ester, sodium ascorbate, an ascorbic acid-palmitic acid ester, dl-α-tocopherol, sodium sulfite, sodium hyposulfite, potassium sulfite, potassium hyposulfite, sulfur dioxide, potassium pyrosulfite, and sodium pyrosulfite.

The agricultural chemical composition according to the invention is preferably a soluble concentrate and can be produced by firstly mixing an agricultural chemical active ingredient, a cationic surfactant, a nonionic surfactant and an acetylene-based surfactant having an HLB value of 12 or less and other adjuvants with water and the like and, then, uniformly dissolving the resultant mixture.

When the composition is used, it is sprayed either after diluted with water by from 1 to 10000 times or directly without being diluted.

### Examples

Test example 1: herbicidal effect test by treating leave and stem

A sterilized diluvial soil was put in a 5-inch bowl made of plastics and, then, a tuber of field horsetail was embedded in the soil or seeds of common dayflower were sown and covered with the soil in a thickness of about 1.5 cm and, thereafter, the bowl was moved in a green house at a temperature of 25°C and, then, vegetation was performed. After 30 days of the vegetation for the field horsetail or after 15 days of the vegetation for the common dayflower, the composition shown in Table 1 was diluted with water at a dilution ratio as shown in Table 2. The resultant sprayable solution was uniformly sprayed on leave and stem portions at a rate of 50 L/10 a by using a small-sized sprayer.

At the point of time at which the predetermined number of days as shown in Table 2 has passed after such treatment with the chemical, herbicidal effects against various types of plants were investigated in accordance with an evaluation criterion of from 0: no influence to 100: totally withering. The results are shown in Table 2.

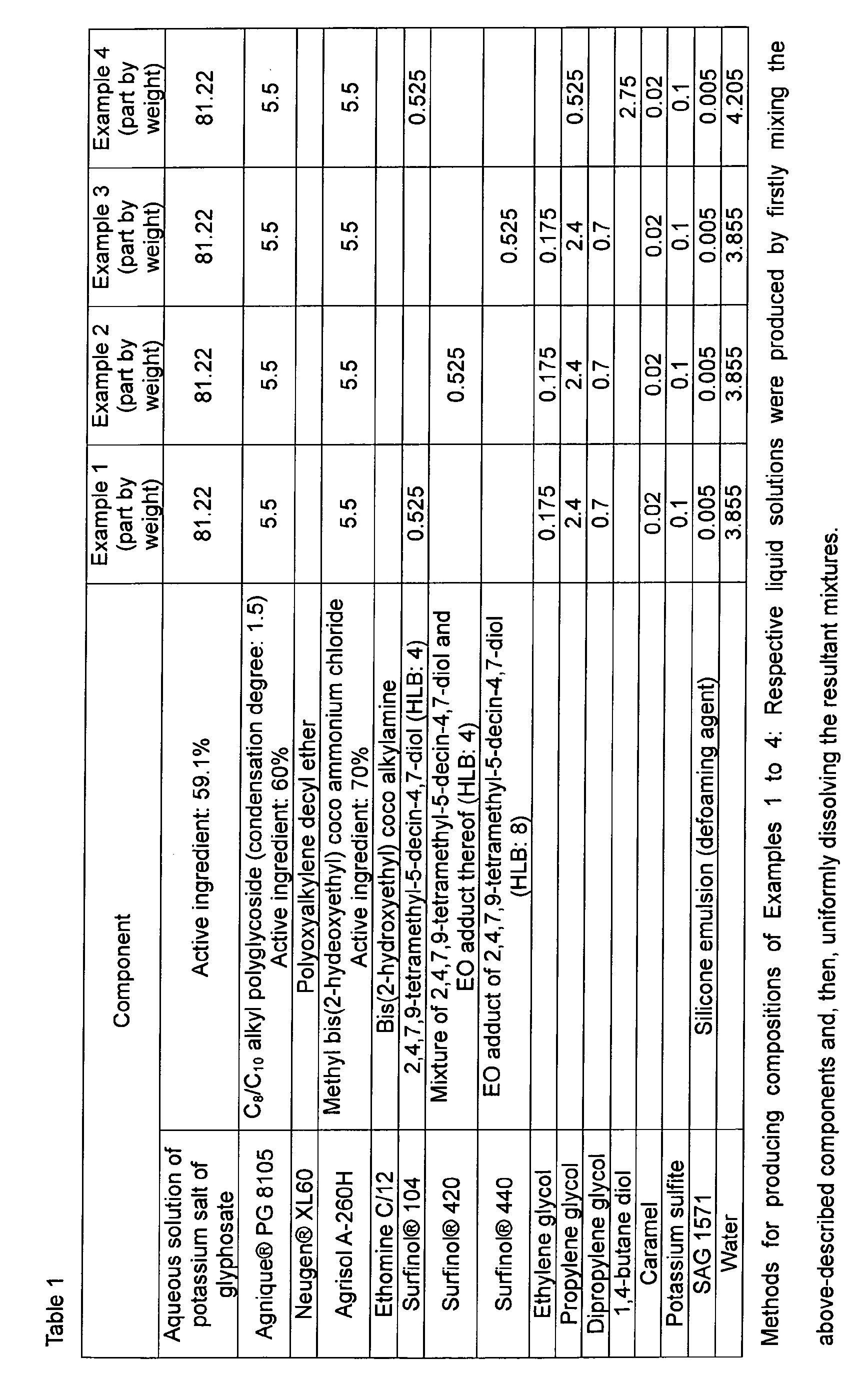

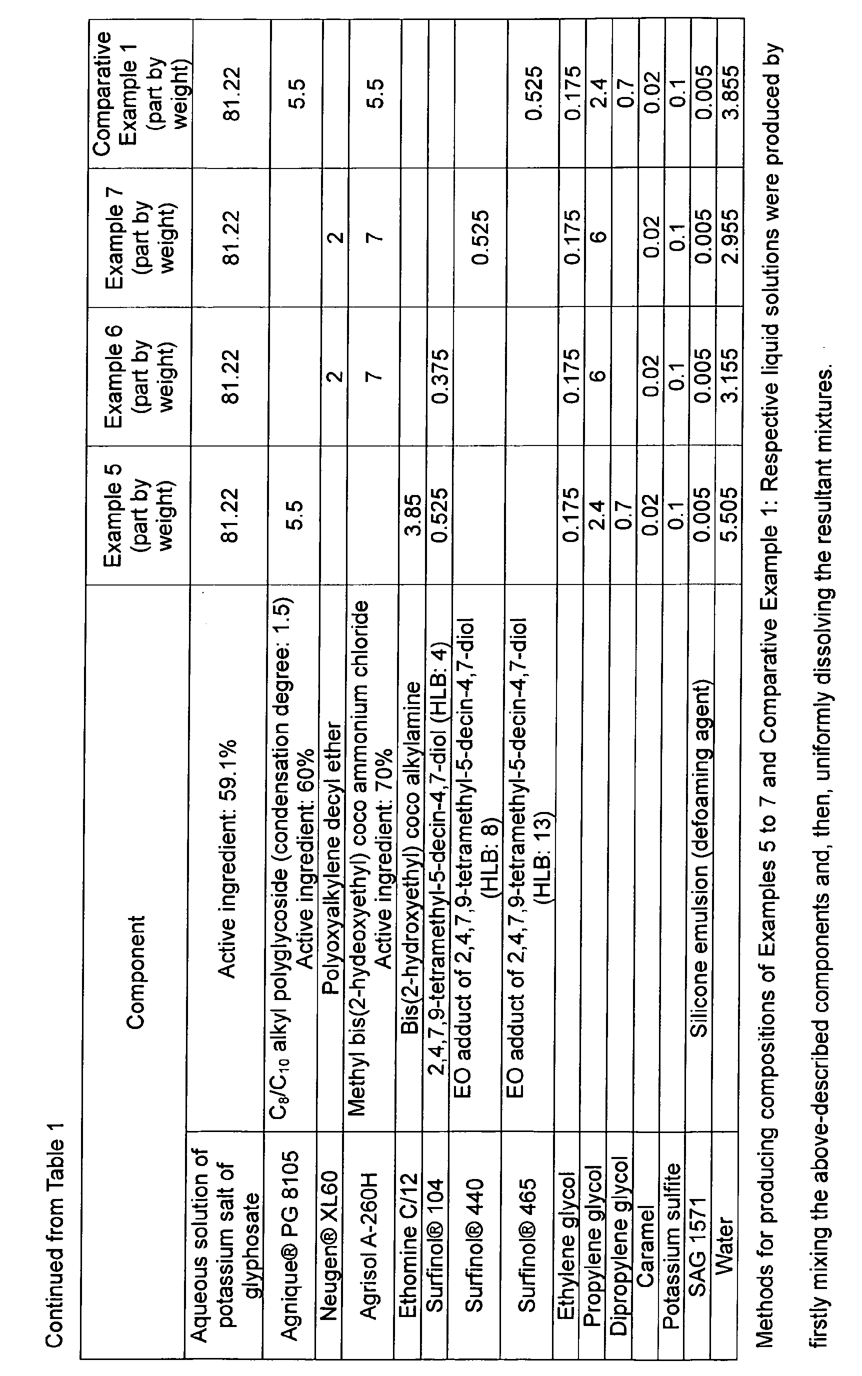

**Table 2**

| | Plant | Dilution ratio | Number of days after treatment | Herbicidal effect* | | | | | | | |
|---|---|---|---|---|---|---|---|---|---|---|---|
| | | | | Example 1 | Example 2 | Example 3 | Example 4 | Example 5 | Example 6 | Example 7 | Comparative Example 1 |
| Test 1 | Field horsetail | 100 times | 20 days | 86 | 85 | 90 | | | | | 55 |
| Test 2 | Field horsetail | 100 times | 28 days | 95 | | | 81 | 97 | 93 | 99 | |
| Test 3 | Common dayflower | 50 times | 28 days | 84 | | | 82 | 88 | 97 | 88 | |

| | | | | | | | | | | | |
|---|---|---|---|---|---|---|---|---|---|---|---|
| *Evaluation criterion: from 0: no influence to 100: totally withering | | | | | | | | | | | |

The agricultural chemical composition according to the invention is effective in controlling the pests and excellent in promoting the controlling effect and the final controlling effect.

## Claims

1. An agricultural chemical composition, comprising an agricultural chemical active ingredient, a cationic surfactant, a nonionic surfactant and an acetylene-based surfactant having an HLB value of 12 or less.

2. The composition according to claim 1, wherein the nonionic surfactant is an alkyl glycoside, an alkyl polyglycoside or a polyoxyalkylene alkyl ether.

3. The composition according to claim 1 or 2, wherein the agricultural chemical active ingredient is a herbicide.

4. The composition according to claim 3, wherein the herbicide is an amino acid-based herbicide.

5. The composition according to claim 4, wherein the amino acid-based herbicide is at least one type selected from among glyphosate, bialaphos, glufosinate and salts thereof.

6. The composition according to claim 4, wherein the amino acid-based herbicide is at least one type selected from among glyphosate and salts thereof.
